(19) Europäisches Patentamt
European Patent Office
Office européen des brevets

(11) Veröffentlichungsnummer: **0 193 741**
**B1**

(12) # EUROPÄISCHE PATENTSCHRIFT

(45) Veröffentlichungstag der Patentschrifft: **17.01.90**

(51) Int. Cl.⁴: **C 08 G 63/66**, C 08 G 81/02, C 09 K 19/38

(21) Anmeldenummer: **86101407.4**

(22) Anmeldetag: **04.02.86**

(54) **Blockcopolymere aus gegebenenfalls substituierten Poly(oxy-1,4-phenylen)Segmenten und flüssig-kristallinen Segmenten.**

(30) Priorität: **14.02.85 DE 3505142**

(43) Veröffentlichungstag der Anmeldung: **10.09.86 Patentblatt 86/37**

(45) Bekanntmachung des Hinweises auf die Patenterteilung: **17.01.90 Patentblatt 90/03**

(84) Bennante Vertragsstaaten: **DE FR GB IT**

(56) Entgegenhaltungen:
**FR-A-2 270 282**
**US-A-3 703 564**
**US-A-3 770 699**
**US-A-3 875 256**

**JOURNAL OF POLYMER SCIENCE: POLYMER SYMPOSIUM, Nr. 60, 1977, Seiten 29-46, John Wiley & Sons Inc., New York, US; J.E. McGRATH et al.: "Homogeneous and microheterogeneous block copolymers"**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Risse, Wilhelm, Dr.**
**4 Colony Boulevard Appartment 412**
**Wilmington Delaware 19802 (US)**
Erfinder: **Heitz, Walter, Prof. Dr.**
**Am Schmidtborn 5**
**D-3575 Kirchhain (DE)**

**EP 0 193 741 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft Blockcopolymere aus gegebenenfalls substituierten Poly(oxy-1,4-phenylen)Segmenten und flüssig-kristallinen Segmenten.

Flüssig-kristalline Homopolymere sind bekannt: z. B. A. Cifferi in W.R. Krigbaum, R.B. Mayer, Polymer Liquid Crystals, Academic Press 1982; J. Preston in A. Blumstein, Liquid Crystalline Order in Polymers Academic Press 1978. Weiterhin ist bekannt, daß Polyoxyphenylene mit Styrolpolymeren mischbar sind. Aus den US-A-3 703 564, 3 875 256 und 3 770 699 sind bereits Blockcopolymere aus PPO sind anderen, aber keinen flüssig-kristallinen Segmenten bekannt.

Es wurde nun gefunden, daß die bekannten Eigenschaften von flüssig-kristallinen Polymeren für spezielle Zwecke nutzbar gemacht werden können, wenn diese mit anderen Polymeren zu Blockcopolymeren aufgebaut werden.

Gegenstand der Erfindung sind Blockcopolymere aus Blöcken A aus Poly-(oxy-1,4-phenylenen) die sich von monofunktionellen Polyphenylenoxiden (Formel I) oder bifunktionellen Polyphenylenoxiden (Formel II) durch Entfall der endständigen Wasserstoffe ableiten

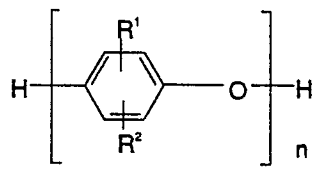

(I),

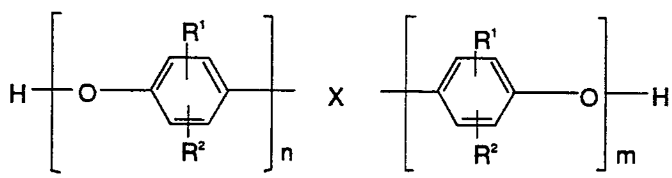

(II),

in welchen

$R^1$ und $R^2$ unabhängig voneinander für Wasserstoff, $C_1$ - $C_6$-Alkyl, Halogen, $C_1$ - $C_6$-Alkenyl, $C_6$ - $C_{14}$-Aryl stehen,
X für Sauerstoff (O), Schwefel (S), $C_1$ - $C_6$-Alkyliden steht und
n und m unabhängig voneinander für eine ganze Zahl, die größer als 2 is, stehen,

und Blöcken B aus flüßig-kristallinen Segmenten B

$—[\text{-Ar–X–Y-}]_p—$ (III),

$—[\text{-Y–X–Ar–X–Y–Ar-}]_p—$ (IV),

$—[\text{-Y–X–Ar–X–Y–Ar–}R^4\text{–Ar-}]_p—$ (V),

in welchen

Ar für 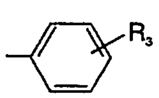, 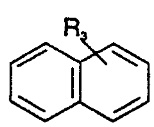, 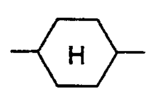

(1,4-Cyclohexyliden als hydrierter Aromat) steht,

wobei in Formeln (IV) und (V) die Reste Ar unterschiedliche Bedeutung haben können,

X - Y für -COO, -CONH, $-CH_2CH_2-$, -CH = CH-, -CH = N-, -N = N-, -NO = N- steht, wobei in Formeln (IV) und (V) X - Y unterschiedliche Bedeutung haben können,

$R^3$ für Wasserstoff, $C_1$ - $C_{18}$-Alkyl, $C_5$ - $C_{18}$-Cycloalkyl, $C_6$ - $C_{14}$-Aryl, -CH = CH-Phenyl steht,

o für eine ganze Zahl > 5, vorzugsweise 5 bis 500 steht,

$R^4$ für $C_1$ - $C_{12}$-Alkylen, $C_5$ - $C_{10}$-Cycloalkylen, $-OR^5$ und $-OR^5O-$ steht, wobei

$R^5$ für $C_1$ - $C_{12}$-Alkylen, $C_5$ - $C_{10}$-Cycloalkylen, $-O(CH_2CH_2O)_q-$ steht, wobei q für eine ganze Zahl 2, 3, 4 oder 5 steht,

wobei der Gewichtsanteil des Blockes A von 3 bis 97 % und der Gewichtsanteil des Blockes B von 97 bis 3 % beträgt und die Blöcke A und B über Ether- oder Esthergruppen verknüpft sind.

Die zum Aufbau der neuen Blockcopolymeren verwendeten Segmente aus gegebenenfalls substituierten Poly(oxy-1,4-phenylenen) (Polyphenylenoxide) können durch bekannte Methoden hergestellt werden, z. B. durch oxidative Polymerisation oder katalysierte Ethersynthese aus gegebenenfalls 2,6-disubstituierten Phenolen. Für die Herstellung unsubstituierter Poly(oxy-1,4-phenylene) ist die katalytische Ethersynthese besonders geeignet.

Vorzugsweise stehen $R^1$ und $R^2$ unabhängig voneinander für Wasserstoff (H), Methyl ($CH_3$), Chlor (Cl), $-CH_2-CH=CH_2$, $-CH_2-CH=CHCH_3$, $C_6H_5$, X für O, S, $CH_2$, i-Propyliden und n und m für eine ganze Zahl von 5 bis 500.

Die Segmente aus gegebenenfalls substituierten Poly(oxy-1,4-phenylenen) (Block A) besitzen phenolische Hydroxylendgruppen und werden mit Segmenten mit flüssig-kristallinen Eigenschaften (Block B) zu den neuen erfindungsgemäßen Blockcopolymeren kondensiert. Diese Kondensation kann über die phenolischen OH-Gruppen erfolgen.

Durch Kondensation der Segmente der Formeln (I) und/oder (II) (Block A) mit den Segmenten der Formeln III, IV und/oder V (Block B) können Blockcopolymere mit unterschiedlichsten Strukturen aufgebaut werden. So können z. B. Blocke aufgebaut werden, die Strukturen AB, ABA, BAB und $(AB)_x$, wobei x für eine Zahl > 1, vorzugsweise 2 bis 100 steht, aufweisen.

Beim Aufbau der Blöcke können die Polyphenylenoxidblöcke A der Formeln I, II mit den flüssig-kristallinen Blöcken über die phenolischen OH-Gruppen der Polyphenylenoxidblöcke über Ether- oder Estergruppen verknüpft sein.

Der Gewichtsanteil des Blockes A beträgt 3 bis 97 % und der des Blockes B 97 bis 3 %, bezogen auf das Gesamtgewicht (Block A + B).

Die neuen Blockcopolymeren können beim Erhitzen anisotrope Schmelzen bilden, was sich auf ihre Anwendung, z. B. beim Abmischen mit anderen Polymeren vorteilhaft auswirken kann.

Die Blockcopolymeren können z. B. als Phasenvermittler bei polymeren Zweiphasensystemen (Polymermischungen) eingesetzt werden, z. B. wenn styrolhaltige Polymere mit flüssig-kristallinen Polymeren abgemischt werden sollen. Die Polymermischungen, die die neuen Blockcopolymeren enthalten, können für bekannte Zwecke weiterverarbeitet werden, z. B. als Formkörper, Spritzgußmaßen, Folien, Fasern.

Die Herstellung der Blockcopolymeren aus Poly(oxy-1,4-phenylen)Segmenten der Formeln (I) und (II) durch Umsetzung mit flüssig-kristallinen Segmenten der Formeln (III), (IV) und (V) kann nach verschiedenen, bekannten Methoden analog durchgeführt werden.

Methode a) Der Aufbau des flüssig-kristallinen Blocks B mit zwei reaktiven Endgruppen, z. B. Säurechloridgruppen, erfolgt durch den Einsatz eines geeigneten Übschusses einer Ausgangsverbindung, z. B. trans-1,4-Cyclohexandicarbonsäuredichlorid. Anschließend erfolgt die Umsetzung mit dem Polyphenylenether (Block A).

Die Reaktionsdauer für die Synthese des flüssig-kristallinen Blockes und die Umsetzung mit dem Polyphenylenether kann jeweils zwischen 1 Stunde und mehreren Tagen betragen, vorzugsweise zwischen 1 und 48 Stunden. Die Reaktionstemperatur liegt zwischen -78°C und 150°C, vorzugsweise zwischen 20°C und 120°C. Als Lösungsmittel können eingesetzt werden: Ether wie Diphenylether oder Hydrochinondimethylether, Sulfolan, Dimethylsulfoxid, N-Methylpyrrolidon, halogenierte Kohlenwasserstoffe, wie z. B. Tetrachlorkohlenstoff, Chloroform, Methylenchlorid, 1,1,2,2-Tetrachlorethan oder Gemische aus diesen. Die Umsetzungen werden in Gegenwart von Basen, wie Pyridin, alkylsubstituierte Pyridine, 4-Dimethylaminopyridin, offenkettige oder cyclische aliphatische Amine, wie z. B. Triethylamin oder Piperidin durchgeführt. Auch die Base kann als Lösungsmittel dienen.

Methode b) Der Polyphenylenether wird vorgegeben und mit einem Überschuß einer für die Synthese des flüssig-kristallinen Blockes benötigten Ausgangsverbindung, z. B. einem Säuredichlorid, umgesetzt. Der Überschuß wird so gewählt, daß pro Mol Polyphenylenether zwischen 2 und 100 Mol, vorzugsweise zwischen 5 und 50 Mol dieser Verbindung eingesetzt werden. Die Reaktionsdauer betragt zwischen 30 Minuten und mehreren Tagen, vorzugsweise zwischen 1 und 24 Stunden. Anschließend werden die übrigen zur Synthese des flüssig-kristallinen Blockes benötigten Komponenten, z. B. aromatische Diole, zugegeben. Die Reaktionsdauer für diese Umsetzung beträgt zwischen 30 Minuten und mehreren Tagen, vorzugsweise zwischen 5 und 48 Stunden. Die Reaktionstemperatur für beide Reaktionsschritte wird zwischen -78°C und +150°C, vorzugsweise zwischen 20°C und 100°C gewählt.

Als Lösungsmittel und Basen können die unter Methode a) angegebenen eingesetzt werden.

Methode c) Der Polyphenylenether wird zusammen mit den Ausgangsverbindungen für die Synthese des flüssig-kristallinen Polyester- oder Polyamidblockes, bestehend aus einer oder mehreren Dicarbonsäuren, einem oder mehreren aromatischen Diolen oder einem oder mehreren aromatischen Diaminen, vorgelegt. In einem Reaktionsschritt werden gleichzeitig durch Umsetzung mit Triphenylphosphin und Hexachlorethan der flüssig-kristalline Block aufgebaut und an den Polyphenylenetherblock angekoppelt. Pro Mol Dicarbonsäure werden zwischen 1 und 4 Mol, vorzugsweise zwischen 1 und 2 Mol Triphenylphosphin und zwischen 1 und 5 Mol Hexachlorethan eingesetzt.

Als Lösungsmittel können Amine wie Pyridin oder methylsubstituierte Pyridine benutzt werden. Die Reaktionsdauer kann zwischen 1 Stunde und mehreren Tagen, vorzugsweise zwischen 5 und 48 Stunden gewählt weden. Die Reaktionstemperatur kann zwischen -40°C und 150°C, vorzugsweise zwischen 20°C und 120°C betragen.

## Beispiele

### I. Herstellung der verwendeten monofunktionellen Polyphenylenetherblöcke

### Beispiel 1

Oxidative Polymerisation

In einem 1 l Dreihalskolben mit KPG-Rührer, Gaseinleitungsrohr und Gasausgang, wurden 2 g CuCl (20 mmol) in 50 ml Pyridin (0,62 mol) und 100 ml Chloroform vorgelegt. In diese Katalysatorlösung werden 15 Minuten lang Sauerstoff eingeleitet. Anschließend werden 100 g 2,6-Dimethylphenol (0,82 mol) gelöst in 500 ml Chloroform zugegeben. Die Reaktionsmischung erwärmt sich auf etwa 30°C. Die Sauerstoffzuführung wird fortgesetzt, bis eine 0,2 ml-Probe der Reaktionslösung beim Eintropfen in eine Mischung aus 25 ml THF und 7,5 ml Methanol einen Niederschlag gibt. Die Reaktionslösung wird dreimal mit je 50 ml einer wäßrigen EDTA-Lösung ausgeschüttelt. Die organische Phase wird in ein Gemisch aus 3 l Methanol und 50 ml konz. HCl gegeben. Das ausgefallene Polymere wird abfiltriert, mit Methanol gewaschen, getrocknet, in 300 ml Chloroform gelöst und erneut mit einem Gemisch aus 1,5 l Methanol und 10 ml konz. HCl gefallt. Das Produkt wird bei 70°C im Ölpumpenvakuum getrocknet.

Ausbeute: 45,3 g (46 %), Molekulargewicht $M_n$ = 1 260 (bestimmt durch Dampfdruckosmometrie), titrierte Funktionalität an phenolischen OH-Gruppen = 1,0.

### Beispiel 2

Polymerisation durch Halogensubstitutuion von 6-Brom-2,6-dimethylphenol

0,3 g CuCl (3 mmol) und 50 ml Pyridin werden in einem 250 ml Dreihalskolben mit Gaseinlaß und Gasabgang vorgelegt. Mit Hilfe eines Magnetrührers wird gerührt und 10 Minuten lang Sauerstoff eingeleitet. Anschließend wird die Sauerstoffzufuhr abgebrochen und in die aktivierte Katalysatorlösung Stickstoff eingeleitet. Nach 10 Minuten werden unter Stickstoff 10 g 4-Brom-2,6-Dimethylphenol (50 mmol) zugegeben. 15 Minuten später werden 1,1 g Kalium-tert.-butylat (10 mmol) zugegeben. Die Reaktionsmischung erwärmt sich kurzzeitig auf 45°C. Nach 2 Stunden Reaktionsdauer wird das Reaktionsgemisch in 400 ml Methanol und 10 ml konz. HCl eingegeben. Das ausgefallene Polymere wird abfiltriert, mit einer Mischung aus 100 ml Methanol und 5 ml konz. HCl und dann mit Methanol und dest. Wasser gewaschen.

Das Polymere wird getrocknet, in Chloroform gelöst, erneut mit Methanol gefällt, filtriert und bei 70°C im Ölpumpenvakuum getrocknet.

Ausbeute: 3,1 g (52 %), Molekulargewicht, bestimmt durch Dampfdruckosmometrie $M_n$ = 2 400, titrierte OH-Funktionalität = 0,9.

### Beispiel 3

Die Polymerisation von 4-Bromphenol durch Ullmann-Veretherung

In einem 500 ml Stickstoffkolben werden unter Stickstoff portionsweise 3,32 g Natrium (0,144 mol) zu 100 ml abs. Methanol gegeben. Mit Hilfe eines Magnetrührers wird gerührt. Nachdem sich das Natrium vollständig umgesetzt hat, werden 25 g 4-Bromphenol (0,144 mol) zugegeben. Nach 1 Stunde Reaktionsdauer wird das Methanol im Ölpumpenvakuum vollständig entfernt. Unter Stickstoff werden 90 g absoluter und aufgeschmolzener Hydrochinondimethylether zugesetzt. Nachfolgend werden 0,24 g Kupfer(I)-chlorid (2,4 mmol) und 1 ml Pyridin zugegeben. Das Reaktionsgefäß wird mit einem Rückflußkühler versehen und für 15 Minuten im Ölbad auf 100°C erwärmt. Anschließend wird die Reaktionstemperatur auf 200°C erhöht. Nach 5 Stunden Reaktionszeit wird die Temperatur auf 80°C gesenkt und das Reaktionsgemisch in 500 ml Methanol gegeben. Dabei fallen das Polymere und Natriumbromid aus. Der Niederschlag wird filtriert und mit Diethylether, Methanol und Wasser gewaschen. Das Polymere wird durch Erwärmen auf 110°C in 150 ml Pyridin gelöst, heiß filtriert und erneut mit Methanol ausgefällt.

Ausbeute: 7,3 g (55 %), $\eta_{inh}$ = 0,14 (NMP bei 30°C), dampfdruckosmometrisch bestimmtes Molekulargewicht $M_n$ = 3 500.

**II. Synthese der verwendeten bifunktionellen Polyphenylenetherblöcke**

**Beispiel 4**

Oxidative Copolymerisation
In einem 1 l Dreihalskolben mit KPG-Rührer, Gaseinleitungsrohr und Gasausgang, werden 1,5 g Kupfer(I)-chlorid (15 mmol) 3,7 g 4-Dimethylaminopyridin (30 mmol) und 50 ml Chloroform gegeben. Diese Katalysatorlösung wird aktiviert, indem unter Rühren (Magnetrührer) Sauerstoff eingeleitet wird. Nach 15 Minuten werden 4,65 g 3,3,5,5'-Tetramethylbisphenol-A (16,4 mmol) und 50 g 2,6-Dimethylphenol (0,41 mol) gelöst in 300 ml Chloroform zugegeben und die Sauerstoffzufuhr für 2 Stunden fortgeführt. Mit Hilfe eines Wasserbades wird die Reaktionstemperatur auf 20°C gehalten. Das Polymere wird durch Eingießen in ein Gemisch aus 1,2 l Methanol und 10 ml konz. HCl ausgefällt, filtriert, mit Methanol gewaschen und getrocknet. Der Polyphenylenether wird in 200 ml Chloroform gelöst und mit einem Gemisch aus 1 l Methanol und 5 ml konz. HCl gefällt, filtriert, mit Methanol gewaschen und bei 70°C im Ölpumpenvakuum getrocknet.

Ausbeute: 44 g (80 %), dampfdruckosmometrisch bestimmtes Molekulargewicht $M_n$ = 3 500, titrierte OH Funktionalität = 1,75.

**Beispiel 5**

Copolymerisation unter Halogensubstitution
In einem 250 ml Stickstoffkolben werden 0,4 g Kupfer(I)-chlorid (4 mmol) und 60 ml Pyridin vorgelegt. Unter Rühren mit Hilfe eines Magnetrührers wird 10 Minuten lang Sauerstoff eingeleitet. Die Sauerstoffzufuhr wird beendet und Stickstoff eingeleitet. Nach 10 Minuten werden 10 g 4-Brom-2,6-dimethylphenol (49,8 mmol) und 0,4 g 3,3, 5,5'-Tetramethylbisphenol-A (1,4 mmol) zugesetzt. Innerhalb von einer Stunde werden 4,5 g Kalium-tert.-butylat (40 mmol) in 4 gleichen Portionen zugegeben. Das Reaktionsgefäß wird dabei mit Hilfe eines Wasserbades auf 20°C temperiert. Nach einer weiteren Stunden Reaktionsdauer wird die Reaktionslösung in ein Gemisch auf 400 ml Methanol und 10 ml konz. HCl gegeben. Das ausgefallene Polymere und mitgefälltes Kaliumbromid werden filtriert, mit einem Gemisch aus 100 ml Methanol und 10 ml konz. HCl, mit Methanol und dest. Wasser gewaschen und getrocknet. Das Polymere wird in 50 ml THF gelöst und mit 300 ml dest. Wasser erneut gefällt. Das Produkt wird mit Wasser und Methanol gewaschen und bei 70°C im Ölpumpenvakuum getrocknet.

Ausbeute: 5,1 g (80 %), dampfdruckosmometrisch bestimmtes Molekulargewicht $M_n$ = 3 600, inhärente Viskosität (bestimmt in 1,1 2,2-Tetrachlorethan/Phenol 60/40) $\eta_{inh}$ = 0,14, titrierte Funktionalität an phenolischen OH-Gruppen = 1,9.

**III. Die Darstellung von $(AB)_n$-Blockpolymeren durch Copolymerisationsmethode C**

**Beispiel 6**

504 mg des Polyphenylenethers aus Beispiel 5 ($M_n$ = 3 600, 0,14 mmol), 344 mg trans-1,4-Cyclohexandicarbonsäuren (2 mmol) und 231 mg 2-Methylhydrochinon (1,86 mmol) werden unter Stickstoff in 20 ml Pyridin gelöst. Reaktionsapparatur ist ein 100 ml Dreihalskolben mit Gaseinlaß, Gasabgang und Rückflußkühler. Die Reaktionslösung wird mit Hilfe eines Magnetrührers gerührt. Es werden nacheinander 1,31 g Triphenylphosphin (5 mmol) und 1,42 g Hexachlorethan (6 mmol) zugegeben. Dabei erwärmt sich das Reaktionsgemisch. Mit Hilfe eines Ölbades wird eine Reaktionstemperatur von 70°C eingestellt. Nach 18 Stunden wird die Reaktion beendet und das Polymere in Aceton gefällt, filtriert, mit Wasser, Methanol und Aceton gewaschen und bei 70°C im Ölpumpenvakuum getrocknet.

Ausbeute: 0,88 g (85 %), inhärente Viskosität $\eta_{inh}$ = 0,66 (gemessen in 1,1,2,2-Tetrachlorethan(TCE)/Phenol 60/40 bei 30°C) PPO-Gehalt = 49 Gew.-% (IR-Spektroskopie), 52 Gew.-% ($H^1$-NMR-Spektroskopie in $d^2$ 1,1,2,2-Tetrachlorethan/$d^6$-Phenol 95/5), ab 255°C anisotrope Schmelze (Polaristaionsmikroskopie).

**Beispiel 7**

Darstellung nach Copolymerisationsmethode b
In der Reaktionsapparatur, bestehend aus einem 100 ml Dreihalskolben mit Rückflußkühler, Gaseinleitungsrohr und Gasabgang, werden unter Stickstoff 537 mg trans-1,4-Cyclohexandicarbonsäuredichlorid (2,56 mmol) in 5 ml Chloroform gelöst. Unter Rühren (Magnetrührer) wird eine Lösung von 595 mg Poly(2,6-dimethyl-1,4-phenylenoxid) (Polymeres von Beispiel 4, 0,17 mmol) in 8 ml Chloroform und 2 ml Pyridin zugegeben. Die Reaktionstemperatur wird mit Hilfe eines Ölbades auf 40°C gehalten. Nach 2 Stunden werden 296 mg 2-Methylhydrochinon (2,39 mmol) gelöst in 5 ml Pyridin zugegeben. Nach 18 Stunden Reaktionsdauer bei 40°C wird das Block-Copolymere in 150 ml Aceton gefällt,

filtriert und mit Methanol, Wasser und Aceton gewaschen. Das Polymere wird bei 70°C im Ölpumpenvakuum getrocknet.

Ausbeute: 1,09 g (87 %), $\eta_{inh}$ = 0,26 (TCE/Phenol 60/40 Gew.-% bei 30°C), ab 250°C anisotrope Schmelze (Polarisationsmikroskopie).

**IV. Die Synthese von AB- und ABA-Blockpolymeren aus Polyphenylenetherblöcken A und flüssigkristallinen Blöcken B**

**Beispiel 8**

Copolymerisationsmethode c
689 mg trans-1,6-Cyclohexandicarbonsäuren (4 mmol), 477 mg 2-Methylhydrochinon (3,85 mmol) und 528 mg des in Beispiel 1 hergestellten Poly(2,6-diemethyl-1,4-phenylenoxids) (0,3 mmol) werden in 15 ml Pyridin gelöst. Die Reaktionsapparatur besteht aus einem 100 ml Dreihalskolben mit Gaseinlaß, Gasabgang und Rückflußkühler. Es wird mit einem Magnetrührer gerührt. Unter Stickstoff werden nacheinander 2,62 g Triphenylphosphin (10 mmol) und 2,84 g Hexachlorethan (12 mmol) zugegeben. Die Reaktionsmischung erwärmt sich und wird mit Hilfe eines Ölbades auf eine Temperatur von 50°C temperiert. Nach einer Reaktionsdauer von 18 Stunden wird das Blockcopolymere in 150 ml Methanol gefällt. Das Produkt wird filtriert, mehrmals mit Aceton, Wasser und Methanol gewaschen und getrocknet.

Ausbeute: 1,2 g (78 %), $\eta_{inh}$ = 0,32 (TCE/Phenol 60/40 Gew.-% bei 30°C), PPO-Gehalt (IR-Spektroskopie) = 30 Gew.-%, Polarisationsmikroskopie zeigt oberhalb von 230°C flüssig-kristalines Verhalten.

**Beispiel 9**

Copolymerisationsmethode b
In einem 100 ml Dreihalskolben mit Gaseingang, Gasabgang und Rückflußkühler werden unter Stickstoff 980 mg trans-1,4-Cyclohexandicarbonsäuredichlorid (4,7 mmol) in 6 ml 1,1,2,2-Tetrachlorethan gelöst. Unter Rühren (Magnetrührer) werden 488 mg monofunktioneller Polyphenylenether von Beispiel 2 ($M_n$ = 2 400, 0,2 mmol) gelöst in 8 ml 1,1,2,2-Tetrachlorethan und 2 ml Pyridin mit Hilfe einer 20 ml Spritze zugegeben. Das Reaktionsgefäß wird in einem Ölbad auf 60°C erwärmt. Nach 1,5 Stunden werden 569 mg 2-Methylhydrochinon (4,6 mmol) gelöst in 5 ml 1,1,2,2-Tetrachlorethan und 5 ml Pyridin zugegeben. Nach weiteren 18 Stunden Reaktionsdauer bei 60°C wird das Produkt in 150 ml Aceton gefällt, filtriert und mit Wasser, Methanol und Aceton gewaschen. Das Polymere wird bei 70°C im Ölpumpenvakuum getrocknet.

Ausbeute: 1,21 g (72 %), $\eta_{inh}$ = 0,28 (bestimmt in TCE/Phenol 60/40 Gew.-% bei 30°C). Das Polymere besitzt oberhalb von 230°C eine anisotrope Schmelze.

**Beispiel 10**

Copolymerisationsmethode c
In der Reaktionsapparatur, bestehend aus einem 100 ml Dreihalskolben, Rückflußkühler, Gaseingangs- und Gasabgangsstück werden 344 mg trans-1,4-Cyclohexandicarbonsäure (2 mmol), 232,5 mg 2-Methylhydrochinon (1,88 mmol) und 500 mg Poly(1,4-phenylenoxid) (Produkt von Beispiel 3, (0,14 mmol) durch Erhitzen auf 120°C (Ölbad) in 20 ml Pyridin gelöst. Das Reaktionsgemisch befindet sich unter Intergasatmosphäre (Stickstoff). Mit Hilfe eines Magnetrührers wird gerührt. Es werden nacheinander 1,31 g Triphenylphosphin (5 mmol) und 1,42 g Hexachlorethan (6 mmol) zugesetzt. Das Reaktionsgemisch wird 18 Stunden lang auf 80°C erwärmt. Nach dem Abkühlen wird das Blockcopolymere in 150 ml Methanol gefällt, filtriert und mit Aceton, Methanol und Wasser gewaschen. Das Produkt wird bei 70°C im Ölpumpenvakuum getrocknet.

Ausbeute: 900 mg (90 %). Oberhalb von 230°C zeigt das Polymere im Polarisationsmikroskop eine anisotrope Schmelze. Nach der C,H,O-Analyse besitzt das Blockcopolymere einen Gehalt von 50,9 % Polyphenylenoxid; der theoretische Wert beträgt 49,8 %.

**Patentansprüche**

1. Blockcopolymere aus Blöcken A aus Poly-(oxy-1,4-phenylenen) die sich von monofunktionellen Polyphenylenoxiden (Formel I) oder bifunktionellen Polyphenylenoxiden (Formel II) durch Entfall der endständigen Wasserstoffe ableiten

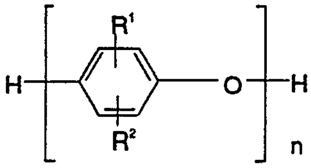

(I),

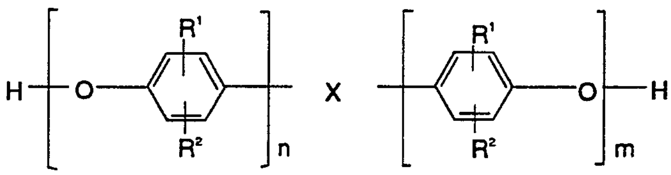

(II),

in welchen

$R^1$ und $R^2$ unabhängig voneinander für Wasserstoff, $C_1$ - $C_6$-Alkyl, Halogen, $C_1$ - $C_6$-Alkenyl, $C_6$ - $C_{14}$-Aryl stehen,
X für Sauerstoff (O), Schwefel (S), $C_1$ - $C_6$-Alkyliden steht und
n und m unabhängig voneinander für eine ganze Zahl, die größer als 2 is, stehen,

und Blöcken B aus flüßig-kristallinen Segmenten B

$—[\text{-Ar–X–Y-}]_o—$ (III),

$—[\text{-Y–X–Ar–X–Y–Ar-}]_p—$ (IV),

$—[\text{-Y–X–Ar–X–Y–Ar–}R^4\text{–Ar-}]_p—$ (V),

in welchen

Ar für 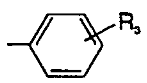 , 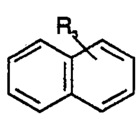 , 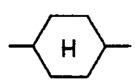

(1,4-Cyclohexyliden als hydrierter Aromat) steht,
wobei in Formeln (IV) und (V) die Reste Ar unterschiedliche Bedeutung haben können,

X - Y für -COO, -CONH, $-CH_2CH_2-$, -CH = CH-, -CH = N-, -N = N-, -NO = N- steht, wobei in Formeln (IV) und (V) X - Y unterschiedliche Bedeutung haben können,
$R^3$ für Wasserstoff, $C_1$ - $C_{18}$-Alkyl, $C_5$ - $C_{18}$-Cycloalkyl, $C_6$ - $C_{14}$-Aryl, -CH = CH-Phenyl steht,
o für eine ganze Zahl > 5, vorzugsweise 5 bis 500 steht,
$R^4$ für $C_1$ - $C_{12}$-Alkylen, $C_5$ - $C_{10}$-Cycloalkylen, $-OR^5$ und $-OR^5O-$ steht, wobei
$R^5$ für $C_1$ - $C_{12}$-Alkylen, $C_5$ - $C_{10}$-Cycloalkylen, $-O(CH_2 - CH_2O)_q-$ steht, wobei q für eine ganze Zahl 2, 3, 4 oder 5 steht,

wobei der Gewichtsanteil des Blockes A von 3 bis 97 % und der Gewichtsanteil des Blockes B 97 bis 3 % beträgt und die Blöcke A und B über Ether - oder Estergrüppen verknüpft sind.

2. Blockcopolymere nach Anspruch 1, dadurch gekennzeichnet, daß sie die Struktur AB besitzen.

3. Blockcopolymere nach Anspruch 1, dadurch gekennzeichnet, daß sie die Struktur ABA besitzen.

4. Blockcopolymere nach Anspruch 1, dadurch gekennzeichnet, daß sie die Struktur BAB besitzen.

5. Blockcopolymere nach Anspruch 1, dadurch gekennzeichnet, daß sie die Struktur $(AB)_x$ besitzen, wo x für eine Zahl > 1 steht.

## Claims

1. Block copolymers of blocks A of poly-(oxy-1,4-phenylenes) derived from monofunctional polyphenylene oxides (formula I) or bifunctional polyphenylene oxides (formula II) by elimination of the terminal hydrogens

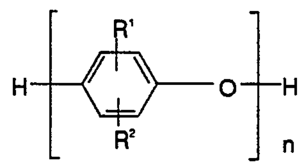 (I),

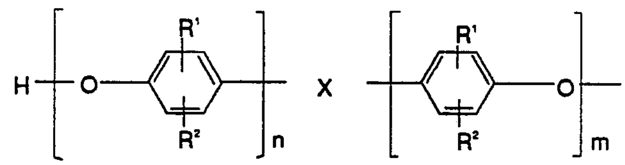 (II),

in which

$R^1$ and $R^2$ independently of one another represent hydrogen, $C_1$ - $C_6$ alkyl, halogen, $C_1$ - $C_6$ alkenyl, $C_6$ - $C_{14}$ aryl,
X represents oxygen (O), sulfur (S), $C_1$ - $C_6$ alkylidene and
n and m independently of one another represent an integer greater than 2,

and blocks B of liquid crystalline segments B

$$—[\text{-Ar–X–Y-}]_o— \quad \text{(III)},$$

$$—[\text{-Y–X–Ar–X–Y–Ar-}]_p— \quad \text{(IV)},$$

$$—[\text{-Y–X–Ar–X–Y–Ar–}R^4\text{–Ar-}]_p— \quad \text{(V)},$$

in which Ar represents

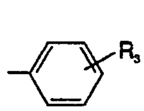 , 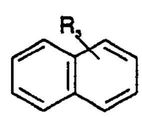 , 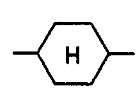

(1,4-cyclohexylidene as hydrogenated aromatic compound); in formula (IV) and (V), the Ar's may have different meanings,

X - Y represents -COO, -CONH, $-CH_2CH_2-$, -CH = CH-, -CH = N-, -N = N-, -NO = N-; X - Y can have different meanings in formulae (IV) and (V),
$R^3$ is hydrogen, $C_1$ - $C_{18}$ alkyl, $C_5$ - $C_{18}$ cycloalkyl, $C_6$ - $C_{14}$ aryl, -CH = CH-phenyl,
o is an integer of > 5, preferably from 5 to 500,
$R^4$ is $C_1$ - $C_{12}$ alkylene, $C_5$ - $C_{10}$ cycloalkylene, $-OR^5$ and $-OR^5O-$ where $R^5$ is $C_1$ - $C_{12}$ alkylene, $C_5$ - $C_{10}$ cycloalkylene, $-O(CH_2 - CH_2O)_q-$ where q is an integer of 2, 3, 4 or 5,

the proportion by weight of block A being from 3 to 97 % and the proportion by weight of block B being from 97 to 3 % by weight and the blocks A and B being attached by ether or ester groups.

2. Block copolymers as claimed in claim 1, characterized in that they have the structure AB.

3. Block copolymers as claimed in claim 1, characterized in that they have the structure ABA.

4. Block copolymers as claimed in claim 1, characterized in that they have the structure BAB.

5. Block copolymers as claimed in claim 1, characterized in that they have the structure $(AB)_x$ where x is a number of > 1.

## Revendications

1. Copolymères séquencés consistant en blocs A de poly(oxy-1,4-phénylènes) dérivant d'oxydes de polyphénylène monofonctionnels (de formule I) ou d'oxydes de polyphénylène bifonctinnels (de formule II) par élimination des atomes d'hydrogéne terminaux

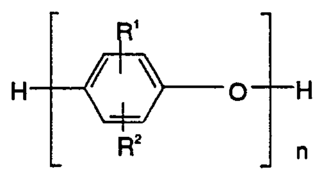

(I),

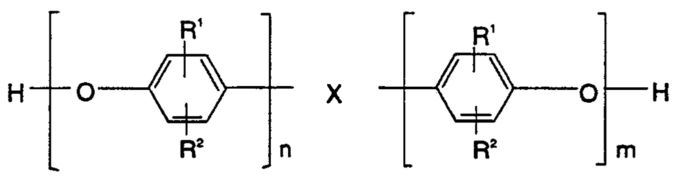

(II),

les symboles de ces formules ayant les significations suivantes:

$R^1$ et $R^2$ représentent chacun, indépendamment l'un de l'autre, l'hydrogène, un groupe alkyle en $C_1$ - $C_6$, un halogène, un groupe alcényle en $C_1$ - $C_6$, aryle en $C_6$ - $C_{14}$,
X représente l'oxygène (O), le soufre (S), un groupe alkylidène en $C_1$ - $C_6$ et
n et m sont égaux chacun, indépendant l'un de l'autre, à un nombre entier supérieur à 2,

et blocs B de segments à cristaux liquides B

—[-Ar–X–Y-]$_p$— (III),

—[-Y–X–Ar–X–Y–Ar-]$_p$— (IV),

—[-Y–X–Ar–X–Y–Ar–$R^4$–Ar-]$_p$— (V),

dans lesquels

Ar représente 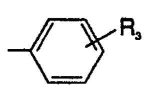 , 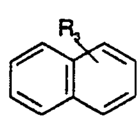 , 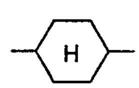

(le cycle aromatique hydrogéné est un cycle 1,4-cyclohexylidène), les symboles Ar pouvant avoir des significations différentes dans les formules IV et V,

X - Y représente -COO, -CONH, $-CH_2CH_2-$, -CH = CH-, -CH = N-, -N = N-, -NO = N-, les symboles X - Y pouvant avoir des significations différentes dans les formules IV et V,

$R^3$ représente l'hydrogène, un groupe alkyle en $C_1$ - $C_{18}$, cycloalkyle en $C_5$ - $C_{18}$, aryle en $C_6$ - $C_{14}$, -CH = CH-phényle,

o est un nombre entier supérieur à 5 et allant de préférence de 5 à 500,

$R^4$ représente un groupe alkylène en $C_1$ - $C_{12}$ cycloalkylène en $C_5$ - $C_{10}$, $-OR^5$ ou $-OR^5O-$,

$R^5$ représente un groupe alkylène en $C_1$ - $C_{12}$, cycloalkylène en $C_5$ - $C_{10}$, $-O(CH_2 - CH_2O)_q-$, dans lequel q est un nombre entier égal à 2, 3, 4 ou 5,

les proportions relatives en poids du bloc A étant de 3 à 97 % et les proportions relatives en poids du bloc B de 97 à 3 % et les blocs A et B étant reliés entre eux par l'intermédiaire de groupes éther ou ester.

2. Copolymères séquencés selon la revendication 1, caractérisés en ce qu'ils possèdent la structure AB.

3. Copolymères séquencés selon la revendication 1, caractérisés en ce qu'ils possèdent la structure ABA.

4. Copolymères séquencés selon la revendication 1, caractérisés en ce qu'ils possèdent la structure BAB.

5. Copolymères séquencés selon la revendication 1, caractérisés en ce qu'ils possèdent la structure $(AB)_x$ dans laquelle x est un nombre supérieur à 1.